# EUROPEAN PATENT SPECIFICATION

(11) **EP 1 430 265 B1**
(45) Date of publication and mention of the grant of the patent: **15.11.2006**
(21) Application number: 02798872.4
(22) Date of filing: 12.09.2002
(51) Int. Cl.: F28F 3/04, F28D 9/00, B01J 19/24, B01J 19/32

(54) **DEVICE AND METHOD FOR PERFORMING CATALYTIC REACTIONS IN A PLATE HEAT EXCHANGER**
VORRICHTUNG UND VERFAHREN ZUR DURCHFÜHRUNG KATALYTISCHER REAKTIONEN IN EINEM PLATTENWÄRMETAUSCHER
DISPOSITIF ET PROCEDE PERMETTANT DE REALISER DES REACTIONS CATALYTIQUES DANS UN ECHANGEUR A PLAQUES

(30) Priority: 20.09.2001 SE 0103125
(43) Date of publication of application: 23.06.2004
(73) Proprietor: Catator AB, 223 70 Lund (SE)
(72) Inventor: SILVERSAND, Fredrik, A, S-246 50 Löddeköpinge (SE)
(74) Representative: Boberg, Nils Gunnar Erik
(86) International application number: PCT/SE2002/001632
(87) International publication number: WO 2003/025490

(56) References cited:
- EP-A1- 0 428 265
- WO-A2-02/20149
- DE-A1- 10 036 602
- US-A- 6 129 973
- US-B1- 6 190 624
- US-B1- 6 192 596
- US-B1- 6 274 101

## Description

### TECHNICAL FIELD OF THE INVENTION

The present invention relates to a device and a method for interchange of heat in plate heat exchangers. This type of heat exchangers are often used in connection with interchange of heat of medias, such as gases and liquids. Usually occurring heat exchangers of this type comprise joined corrugated or patterned plates, substantially separating the medias to be heat exchanged. The present invention further relates to a device and a method for simultaneously performing catalytic reactions and interchange of heat of media flowing through the device. The present invention also relates to a method for the manufacture of such a device.

### STATE OF THE ART

it is widely known that metal plates can be suitably corrugated or pattemed and then joined together in a relative distance by a soldering process to obtain a plate heat exchanger. Generally occurring heat exchangers of this type further comprise inlet ports and outlet ports for the medium to be heat exchanged. The flow direction in this type of heat exchanger units is along the plates, wherein a favourable thermal efficiency can be obtained. Thus, plate heat exchangers of the prior art are arranged so that a first medium is flowing along one side of the metal plates and a second medium is flowing on the opposite side thereof.

One problem with prior art heat exchangers is that the structure results in difficulties in implementation of a catalytic function. To render this possible the catalyzer must be applied on the surfaces of the metal plates before the soldering process, which is performed in a high temperature environment. By this the catalyzer will be destroyed in consequence of thermal sintering and vaporization. It is, however, possible to introduce catalyzer elements into the inlet and outlet ports in the plate heat exchanger but this results in a loss of the intimate connection between the catalyzer and the heat exchanger.

Another problem with such catalytic heat exchangers is that temperature control will render more difficult, wherein the temperature can fluctuate in the catalytic heat exchanger.

It is also possible to coat tubes with a catalyzer, obtaining catalytic tube heat exchanger elements. However, tube heat exchangers does not allow the compact structure of plate heat exchangers, which is a substantial drawback.

Further one problem with prior art catalytic heat exchangers arises when gradual admixing of secondary components is desired. In conventional devices complex systems of tubes and turbolators are utilized to obtain this admixing. One drawback with such structures is that they are cumbersome, ineffective and expensive.

An example of a plate channel reactor is disclosed in US-A-6 190 624.

### SUMMARY OF THE INVENTION

One object of the present invention is to eliminate the above mentioned drawbacks and problems with prior art catalytic heat exchangers. The device according to the present invention as defined in claim 1 provides a highly efficient catalytic plate heat exchanger having a favourable temperature control and interchange of heat. According to some embodiments of the invention effective gradual admixing of a secondary reaction medium is obtained. One additional object of the invention is to provide an effective method for performing catalytic reactions and interchange of heat simultaneously. Yet another object of the invention is to provide a method for the manufacture of such a device according to the invention.

The device according to the invention may comprise a plurality of plate heat exchanger elements designed so that the medium to be processed catalytically can flow through the heat exchanger elements while the heat exchanger medium flows inside the heat exchanger elements. The heat exchanger elements comprise plates arranged with, for example, a suitable arrow-shaped pattern to improve the flow characteristics and the interchange of heat, and comprise a pattern of through apertures having a suitable density. Further, the plates are shaped, forming recesses in the heat exchanger elements in connection with the apertures. The plates may be supplied with projecting portions, in which projecting portions the apertures are arranged. The plates are suitably arranged in pairs, wherein the projecting portions of a first plate are directed towards the projecting portions of a second plate. The projecting portions of the plates form the recesses in the heat exchanger elements. Thus, the distance between the plates are smaller around the apertures, wherein slits are formed around the circumference of the apertures. The plates are joined in pairs by a soldering process, wherein the solder can be drawn into the slits by capillary forces and seal the circumference of the apertures and provide a joining of the plates along the sides, respectively. As solder preferably copper or nickel based alloys are used. The heat exchanger medium is brought in and out through separate ports formed in the plates. The plate material is mouldable so that a suitable arrow-shaped pattern and pattern of apertures may be obtained. In the present case the material has a high durability against corrosive media and favourable heat-resisting properties. Examples of suitable materials are stainless steel, steel comprising chromium, nickel or aluminium (e.g. Kanthal).

By joining the heat exchanger elements through inlet and outlet ports a heat exchanger structure is obtained in which the elements can be heated/cooled by the flowing heat exchanger medium at the same time as the medium to be processed catalytically can flow through the heat exchanger elements. To obtain a catalytic activity the heat exchanger elements can be coated with a catalytic layer, preferably according to a method comprising thermal spraying. Alternatively net structures coated with a catalyzer can be positioned between the heat exchanger elements, providing a thermal contact by means of conduction and radiation.

It is generally known that the yield of many catalytic reactions is insufficient due to large temperature gradients in the catalytic bed. In a conventional catalytic bed it is not possible to easily introduce or remove heat, resulting in an insufficient utilization of the catalyzer. In the case of endoergic reactions (e.g. steam reformation) a conventional bed is supercooled, wherein the reactions stop. In cases of extremely exoergic reactions (e.g. catalytic oxidation) a rushing process is obtained in conventional beds, resulting in catalyzer deactivation and insufficient selectivity.

According to the present invention the temperature of the catalyzer can be kept at a predetermined and controllable level at the same time as axial and radial temperature gradients can be avoided. The pattern of apertures in the heat exchanger element can be designed in different manners and with different densities to provide flow characteristics and heat exchanging characteristics suitable for a specific application.

According to a specific embodiment of the invention the plates in the heat exchanger element are only soldered in the periphery. By this thin slits are formed along the circumference of the apertures, wherein a secondary reaction medium can be supplied to the medium to be processed catalytically in a highly efficient manner. The secondary medium is supplied hereto through the inlet port in the heat exchanger element, wherein the outlet port is blocked/cancelled. By supplying the secondary reaction medium, flowing through the slits, to the medium to be processed catalytically in the apertures and in high speed a favourable mixing on macro and micro level is obtained. This type of periphery soldered elements provides new possibilities in respect of supplying a secondary reaction medium through a catalytic reactor. One example of a possible application can be gradual combustion, wherein air is supplied in different positions along the catalyzer bed. Another application for this type of periphery soldered elements is in connection with fuel cells, wherein the element can work as a combined conductor, gas distributing plate and electrode.

Detailed estimations and design studies have showed that it is possible to obtain plate heat exchanger elements admitting transverse flowing of the media. Consequently a particularly favourable temperature control is obtained at the same time as the plate heat exchanger elements easily can be joined together to a catalytic reactor. The fact that the medium to be processed catalytically flows through the catalyzer results in that it can be utilized in a highly efficient manner, wherein obvious structural and economical advantages are obtained. The heat exchanger medium flows inside the heat exchanger elements and in a direction across the the medium to be processed catalytically. The interchange of heat takes place in the apertures and on the surfaces by means of convection and between the catalyzer and the heat exchanger surfaces by means of conduction and radiation. The estimations show that the difference in temperature between the catalyzer and the heat exchanger surfaces can be limited to a few °C, also in the case of extremely exoergic reactions.

Periphery soldered plate heat exchanger elements of this type can be utilized to solve another substantial process-catalytical problem, that is gradual admixing of secondary components. In conventional reactors complex systems of tubes and turbolators are utilized to obtain this admixing. These structures are cumbersome, inefficient and expensive. Periphery soldered heat exchanger elements can be designed so that a narrow slit is obtained along the circumference of the apertures. By supplying the secondary reaction medium to the inlet port and block/cancel the outlet port the secondary reaction medium is forced to pass through the slits in a high velocity, wherein a highly favourable mixing and homogenizing process takes place. By positioning such heat exchanger elements in series the secondary reaction medium can be introduced gradually, which is advantageous in, e.g., gradual combustion, partial oxidation of hydrocarbons or selective oxidation of carbon monoxide. The secondary reaction medium is further heat exchanged before it is supplied to the slits at the apertures.

To summarize, the invention solves two dominant and hitherto limiting problem areas in the field of catalytic processing:
a) The invention provides a highly favourable temperature control, wherein the performance of the catalyzer can be utilized maximally in respect of activity, selectivity and durability.
b) The invention can provide an easy and efficient method for gradually introducing secondary reaction media, making entirely new processes possible.

### BRIEF DESCRIPTION OF THE DRAWINGS

The invention will now be described with the aid of exemplary embodiments and with reference to the accompanying drawings, in which
Fig. 1 is a schematic perspective view of the device according to one embodiment of the invention,
Fig. 2 is a principle cross section view of a heat exchanger element, showing the apertures in the heat exchanger element according to one embodiment of the invention,
Fig. 3 is a principle cross section view of a heat exchanger element, showing the apertures in the heat exchanger element according to one alternative embodiment of the invention,
Fig. 4 is a principle perspective view of a heat exchanger element, showing the design of the catalyzer according to one embodiment of the invention,
Fig. 5 is a principle perspective view of a catalytic net, showing the design of the catalyzer according to one alternative embodiment of the invention,
Fig. 6 is a schematic view of a heat exchanger reactor comprising heat exchanger elements according to the invention,
Fig. 7 is a schematic view of a reactor structure comprising periphery soldered heat exchanger elements, and
Fig. 8 is a schematic view of a fuel cell element based on the invention.

### THE INVENTION

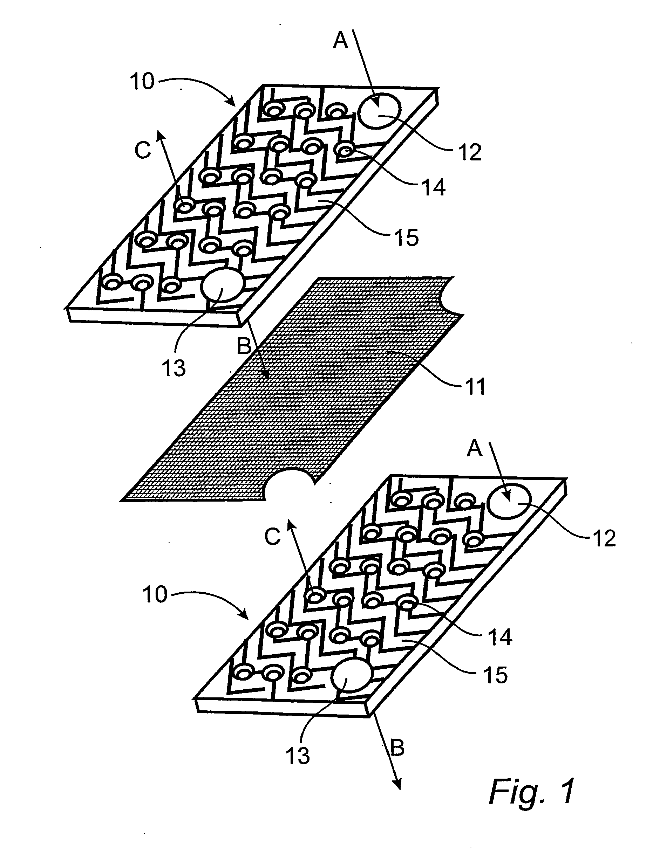

With reference to Fig. 1 heat exchanger elements 10 is shown, between which a catalyzer 11 is arranged forming a heat exchanger reactor. A plurality of heat exchanger elements 10 with catalyzers 11 arranged thereinbetween can be arranged according to desired requirements. In the drawings distances, dimensions and proportions are adapted for the purpose of clarity and increased comprehension of the invention. Thus, distances, proportions and dimensions are not necessarily in conformity with reality. For example, in Fig. 1 the distances between the heat exchanger elements and the catalyzer are considerably larger than in a true device.

In the embodiment shown, the heat exchanger elements 10 are substantially rectangular. Also other designs may be suitable to use depending on the actual application and other circumstances. The heat exchanger elements 10 comprise an inlet port 12 and an outlet port 13 for at least a first medium, wherein the first medium can flow into the heat exchanger elements 10 through the inlet port in the direction of arrow A and out through the outlet port 13 in the direction of arrow B. The flow direction can also be the opposite. Suitably the first medium is a heat exchanging medium to be heat exchanged with a second medium. The second medium is a medium to be processed catalytically in the device according to the invention and heat exchanged with the first medium. In the embodiment shown the inlet port 12 is positioned substantially in a corner of the heat exchanger elements 10 and the outlet port 13 is positioned substantially in a corner on the opposite side of the heat exchanger elements 10 with respect to the extension of the heat exchanger elements 10. The inlet port 12 and the outlet port 13 may be conventionally designed.

The heat exchanger elements 10 further comprise a plurality of lead-throughs in the form of through apertures 14. The apertures 14 extend across the plane of the heat exchanger elements 10. The apertures 14 are adapted for conducting at least the second medium through the heat exchanger elements 10, for example in the direction of arrow C, so that the second medium can pass through from one side of the heat exchanger element 10 to the opposite side thereof. Thus the heat exchanger elements 10 comprise through apertures 14 arranged across the plane of the heat exchanger elements 10, through which at least the second medium can flow towards the catalyzer 11 and for interchange of heat with the first medium flowing in the heat exchanger elements 10. The apertures 14 are arranged with suitable density. It is possible to form the pattern of the apertures 14 in many different ways, such as with respect of position, shape, diameter, density, etc. In some cases the entire heat exchanger element 10 may be covered by such a pattern while in other applications apertures 14 are formed only in portions of the heat exchanger elements 10 to obtain an increased mixing/redistribution of the flow.

The heat exchanger elements 10 further comprise an arrow-shaped pattern 15 on the surfaces of the heat exchanger elements 10 to improve the flow characteristics and the heat transmission. Thus the arrow-shaped pattern 15 is designed to distribute media flowing at the surfaces of the heat exchanger elements 10 over the surfaces.

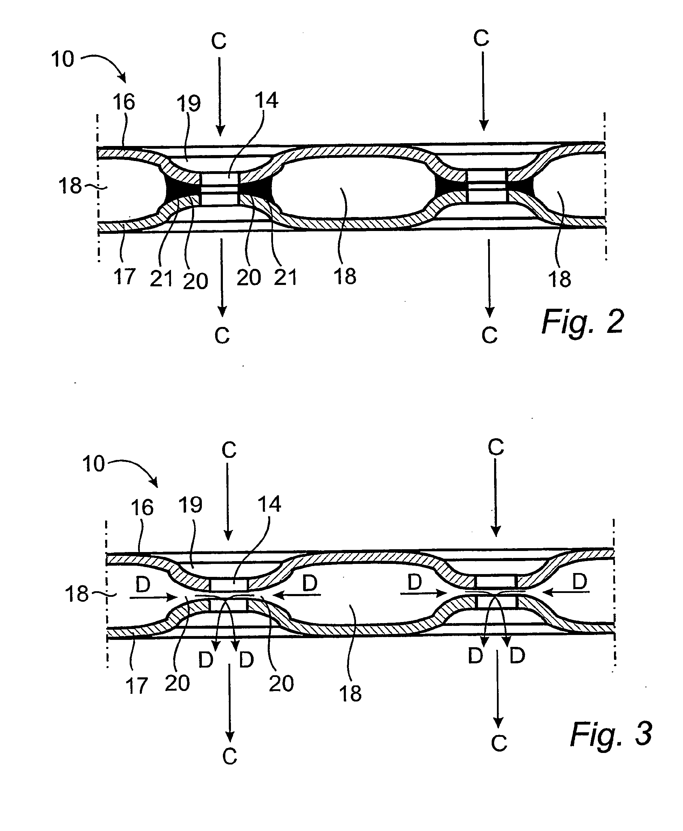

With reference also to Fig. 2 the heat exchanger elements 10 comprise opposite and interconnected plates 16, 17 arranged in pairs. The heat exchanger elements 10 comprise a shaped first plate 16 connected to a shaped second plate 17, forming a space 18 accessible for the first medium through the inlet port 12, wherein the first medium can flow in the heat exchanger element 10. The plates 16, 17 are moulded to obtain a suitable shape or the apertures 14 and the arrow-shaped pattern 15. The plates 16, 17 are formed in a suitable material having a suitable thickness. The plate material is press mouldable to obtain a suitable arrow-shaped pattern and apertures. Preferably, the material is stainless steel but can also be a material with high durability against corrosion and can be comprised of a material with high thermal durability, respectively, such as an alloy comprising iron, chromium, aluminium, nickel or similar metals. The thickness of the plates 16, 17 depend on the desired press depth but is preferably about 0.1 to 1.0 mm.

The space 18 is formed between the plates 16, 17, through which space 18 a medium can flow. In the embodiment shown the space 18 is adapted to the first medium so that it can flow from the inlet port 12, through the space 18 and out through the outlet port 13, for interchange of heat of the second medium flowing through the apertures 14 of the heat exchanger element 10 in the direction of arrow C and at the surfaces of the heat exchanger element 10 outside the space 18.

The heat exchanger elements 10 comprise recesses 19 arranged oppositely in pairs around each aperture 14, which recesses 19 are designed as immersions in the heat exchanger elements 10, forming a slit 20 around a circumference of the apertures 14. The plates 16, 17 are shaped to obtain the recesses 19 in the heat exchanger elements 10 in connection with the apertures 14. The plates 16, 17 are provided with projecting portions, in which projecting portions the apertures are arranged. The plates 16, 17 are arranged in pairs so that the projecting portions of the first plate 16 are directed towards the projecting portions of the second plate 17. The projecting portions of the plates form the recesses 19 in the heat exchanger elements 10. Thus the distance between the plates 16, 17 is smaller at the recesses

19, forming the slits 20 around the apertures 14. Suitably, the recesses 19 are larger than the apertures 14. In the embodiment shown the recesses 19 and the apertures 14 are substantially circular and the recesses 19 are provided with a larger diameter than the apertures 14. The apertures 14 are positioned substantially at a centre of the recesses 19. Suitably, the slits 20 are formed between the contact areas of the plates when press moulding the plates.

In the embodiment of Fig. 2 the slits 20 are blocked by means of a solder 21, preventing medias from passing through between the space 18 and the apertures 14. The solder 21 also join the plates 16, 17 with each other. Preferably, a solder of suitable quality is positioned between the plates 16, 17 before the press moulding so that it is provided with the same pattern as the plates 16, 17. As solder, preferably copper or nickel based alloys is used. The structure formed is then heated in vacuum or in a protective gas, wherein the solder by capillary forces is drawn into and seals all the slits 20 and along the periphery of the plates 16, 17, respectively, and around inlet and outlet ports 12, 13. By this manner a heat exchanger element 10 is formed having apertures 14 through the element, through which the second medium to be processed catalytically can pass. Thus, Fig. 2 is a close-up view showing how the slits 20 in the apertures 14 have been sealed by the solder 21 in consequence of a soldering process.

With reference to Fig. 3 an alternative embodiment of the heat exchanger elements 10 according to the invention is shown. According to this alternative embodiment the heat exchanger element 10 is periphery soldered, wherein the slits 20 at the apertures 14 are left open. Thus, a secondary reaction medium can flow from the space 18 into the second medium through the slits 20. The flow direction of the secondary reaction medium is illustrated in Fig. 3 by means of the arrows D. Suitably, the secondary reaction medium is introduced into the heat exchanger element through the inlet port 12. The height of the slits can be varied in connection with the press mouldering. By blocking/cancelling the outlet port 13 the secondary reaction medium is forced to pass through the slits 20 into the flow passing through the apertures 14. This results in a uniform and nearly homogenous admixing of the secondary reaction medium. By positioning a plurality of heat exchanger elements 10 of this type in series a gradual admixing of the secondary reaction medium is obtained, which provides entirely new possibilities.

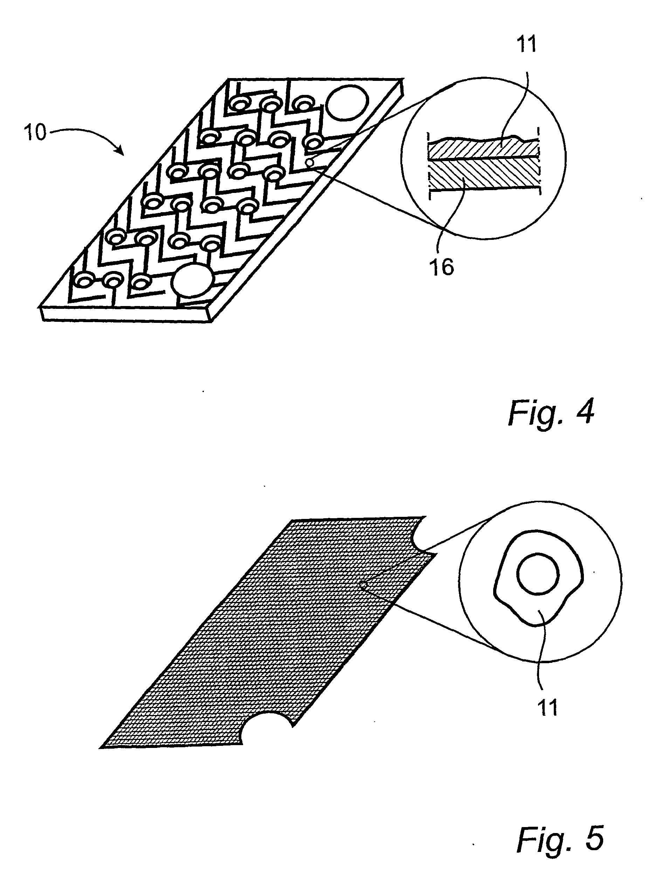

Fig. 4 shows a heat exchanger element 10 provided with the catalyzer 11 according to one embodiment of the present invention. The heat exchanger elements 10 comprise a catalytic layer arranged at the surfaces of the heat exchanger element 10 at which at least the second medium flows. Thus, the catalyzer 11 is arranged by the surfaces of the plates 16, 17, wherein orifices of the apertures 14 are arranged. The heat exchanger element 10 is arranged so that the first medium flows against a surface coated with catalyzer for catalytic reaction or conversion and for interchange of heat with the first medium flowing in the heat exchanger element 10. Then the second medium flows through the apertures 14, wherein additional interchange of heat takes place, and further to an additional surface coated with catalyzer for further catalytic reaction or conversion and interchange of heat. Alternatively the heat exchanger element 10 is arranged with open slits 20 for introducing a secondary reaction medium. Preferably the plates 16, 17 are coated with the catalyzer 11 through a thermal spraying process to obtain a favourable thermal contact between the heat exchanging surface and the catalyzer 11. The thickness of the catalytic layer is preferably within the range of 20 µm and 500 µm. The catalyzer 11 can be brought onto the heat exchanging surfaces directly, preferably by a thermal spraying process.

Such thermal spraying processes for the manufacture of porous ceramic catalyzers formed as catalytic active nets and catalytic layers are, for example, flame spraying, air plasma spraying, high velocity spraying, detonation spraying, corona brushing, protective gas plasma spraying, vacuum plasma spraying, and laser based methods for surface coating. A net structure or a surface is coated with a porous ceramic layer by any thermal spraying process and preferably by flame or air plasma spraying.

The surface is coated with a porous ceramic layer through a thermal forming process by spraying, the ceramic layer having a pore structure of macro pores. An area enlarging ceramic layer is deposited into said macro pores, and the catalytically active material is applied to the surface area enlarged ceramic layer, wherein precious metals, metal oxides or mixtures thereof are used as the active material.

The ceramic layer may consist of numerous materials, but preferably of zirconia or alumina. In order to achieve an enhanced and well-defined pore structure, admixture of combustible components occur (for example polymer and vegetable materials) in the initial ceramic material used for the forming process by spraying. Upon spray-forming, combustion takes place of the combustible component of the two-phase layer, whereby a well-defined pore structure is created. By precipitating a ceramic material in the porous, spray-formed layer a significant enlargement of the ceramic layer specific surface (m²/g of ceramic material) is obtained, and which is required so that adequate and sufficient catalytic activity can be achieved. The precipitated ceramic phase may consist of several different materials, but preferably it consists of alumina, silica, titanium dioxide, zirconia or mixtures of these. The surface area enlarging layer can also be applied as a wash coat on top of the layer formed by spraying. The uneven surface structure of the spray-formed layer hereby constitutes an effective base for the wash coat, which can be applied through a slip casting process. Specific surface can also be increased to a large extent by depositing a ceramic powder into the particle jet originating from the thermal spray-forming equipment. The requirement for this is that the deposited ceramic powder has high specific surface and that depositing occurs in immediate vicinity to the substrate surface. Thereby, no significant heating of the deposited powder is effected, thus eliminating sintering processes which would cause a decrease in specific surface. The ceramic layer is produced according to method 1) direct spraying + secondary surface area enlargement through precipitation, or method 2) spraying with simultaneous depositing of ceramic powder, or a combination of methods 1) and 2) followed by coating with a catalytically active material through an impregnation process. During impregnation the ceramic layer pore structure is saturated with a solution containing the active component, which may include precious metals, transition metals or combinations of these. Upon the step of impregnation, the net structure is dried, and heating then takes place in an oxidizing or reducing environment.

With reference to Fig. 5 the catalyzer 11 according to one embodiment of the invention is arranged on catalytic active net structures designed for positioning between the heat exchanger elements 10 so that the first medium, and possibly the secondary reaction medium, can flow through it. Such catalytic net structures are positioned between the heat exchanger elements to obtain thermal contact through conduction and radiation. Suitably, the catalytic active nets are provided with openings corresponding to the inlet port 12 and the outlet port 13. Due to a relatively favourable thermal contact between the catalytic active net and the heat exchanging surfaces isothermal conditions are nearly obtained. It is possible to dimension the distance between the heat exchanger elements 10 so that a plurality of catalytic active nets can be fitted. Further, the distance between the heat exchanger elements 10 can be varied along the length of the device. Depending on the application the catalyzer 11 can comprise a large number of materials. In general the catalyzer 11 comprises a porous structure which is surface area enlarged by a suitable ceramic material, such as alumina, silica, titania or zeolites, and then coated with an active phase, such as precious metals, metals, metal oxides or combinations thereof. When the catalyzer 11 is supported by nets the net structure may consist of a metal net or a polymer net provided with a catalytic layer, preferably by thermal spraying. Depending on the application, the net structure can be provided with optional porosity and wire diameter.

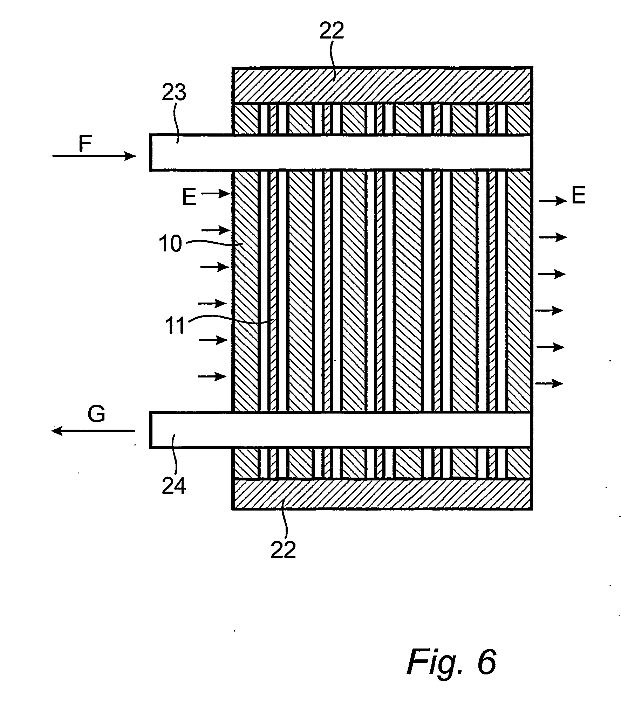

With reference to Fig. 6 a plurality of heat exchanger elements 10 and catalyzer elements having the catalyzer 11 are positioned in series, wherein a heat exchanger reactor is obtained. The catalyzer elements are connected by inlet and outlet ports 12, 13 by press moulding, soldering or welding. The catalyzer 11 is arranged between the heat exchanger elements in the form of catalytic active net structures. Alternatively the catalyzer 11 is formed as catalytic coatings. If the catalyzer 11 comprises net structures they may be introduced between the heat exchanger elements 10 afterwards. The entire structure is then positioned in a housing 22 giving sealing and insulation along the circumference of the structure. The second medium to be processed catalytically is conducted in an axial direction along the device, which is illustrated by the arrows E, and distributed in spaces between the heat exchanger elements 10, which spaces comprise the catalyzer 11. The second medium is conducted through the device via the apertures 14. Thus the second medium is brought into contact with the catalyzer 11 for catalytic reaction and the surfaces of the heat exchanger elements 10 for interchange of heat. The first medium, or the heat exchanger medium, is introduced through a combined inlet 23 in the direction of arrow F and distributed in parallel in all of the heat exchanger elements 10 through the inlet ports 12. The first medium is then conducted out in a combined outlet 24 in the direction of arrow G through the outlet ports 13.

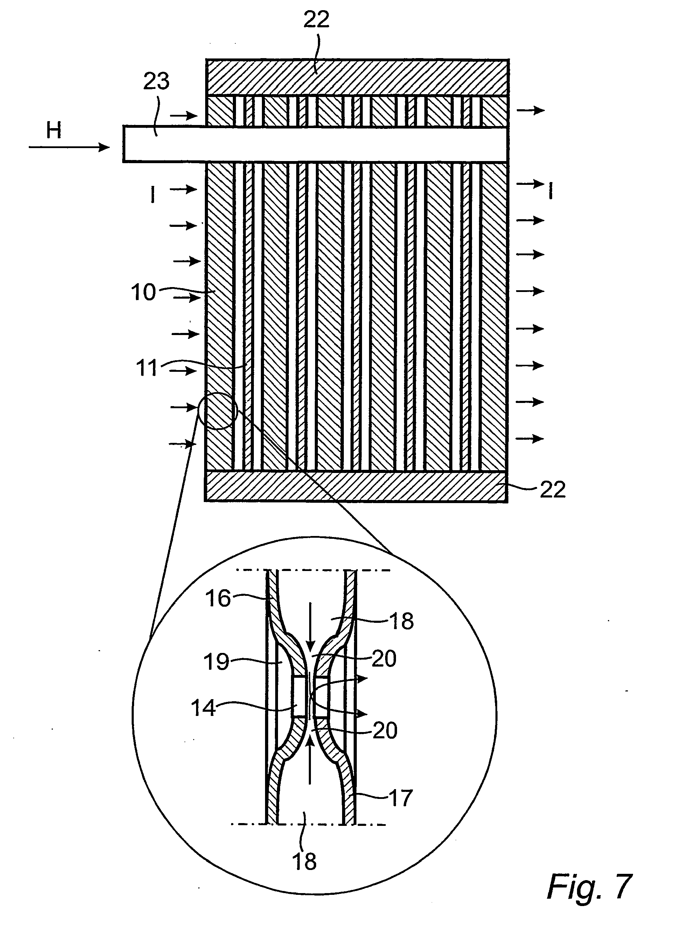

Fig. 7 shows an example of how periphery soldered heat exchanger elements 10 can be utilized in a reactor structure to efficiently and gradually introduce a secondary reaction medium into a flow. In the embodiment of Fig. 7 the device comprises a plurality of heat exchanger elements 10 connected in series. The heat exchanger elements 10 are connected through the combined inlet 23 being in connection with the inlet ports 12, through which the secondary reaction medium can be introduced in the direction of arrow H and distributed in the spaces 18 in the heat exchanger elements 10. Further, the housing 22 provided with insulation and sealing surrounds the heat exchanger elements 10. In the embodiment of Fig. 7 the slits 20 are open as described with reference to Fig. 3. The secondary reaction medium is introduced into the combined inlet 23 and is distributed in parallel to the different periphery soldered heat exchanger elements 10 connected in series. The secondary reaction medium is forced to pass through the slits 20 in the apertures 14 and is thus very efficiently mixed with the flow passing through the apertures 14, which is illustrated by the arrows I, during simultaneous interchange of heat. Thus the secondary reaction medium is introduced into the second medium flowing in the axial direction through the device.

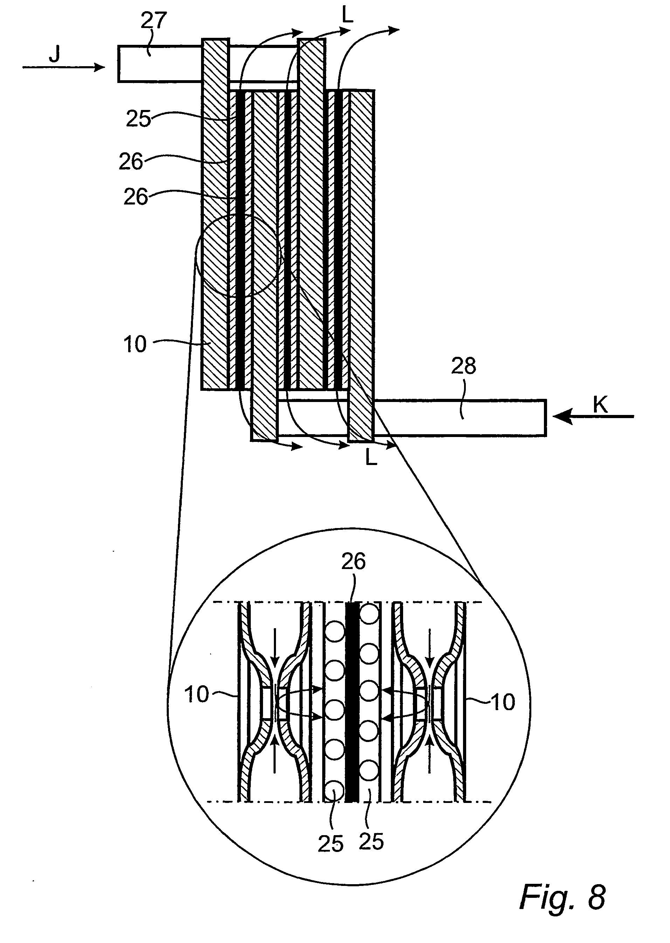

Fig. 8 shows how periphery soldered heat exchanger elements 10 can be utilized for the manufacture of fuel cells. Between consecutive and periphery soldered heat exchanger elements 10 catalytic electrodes 25 and polymer membranes 26 are arranged. The catalyzer, preferably a catalytic active net structure, is in electric connection with the heat exchanger element 10 and in ionic contact with the polymer membrane 26. In an alternative embodiment the heat exchanger element 10 may be provided with a catalytic layer replacing the net structure. In such an embodiment the heat exchanger element also works as a gas distribution plate, electrode and conductor.

In the embodiment of Fig. 8 the device comprises a plurality of heat exchanger elements 10 connected in series. The device further comprises a first inlet 27 arranged for oxygen/air being in connection with every other heat exchanger element 10 through inlet ports 12, and a second inlet 28 for hydrogen gas being in connection with every other heat exchanger element 10 through inlet ports 12. The first inlet 27 is arranged on one side of the device and the second inlet 28 is arranged on the opposite side of the device so that oxygen/air is introduced in the direction of arrow J and hydrogen gas is introduced in the direction of arrow K. The heat exchanger elements 10 are arranged with the space 18, the apertures 14 and the slits 20 as described above. Additionally the heat exchanger elements 10 are blocked in a side opposite the side having the inlet port 12 so that the media introduced into the heat exchanger elements 10 only can pass through the slits 20. Thus the heat exchanger elements 10 are arranged so that oxygen/air flows in one direction in every other heat exchanger element 10 and hydrogen gas flows in the opposite direction in the remaining heat exchanger elements 10 to pass through the slits 20. The gases (hydrogen gas and oxygen/air, respectively) flow through the slits 20 of the heat exchanger element 10 and are brought into contact with the catalyzer 11, wherein a catalytic reaction takes place dividing hydrogen gas into hydrogen ions, which is then conducted through the polymer membrane 26 and recombined with oxygen forming water. Oxygen (air) and hydrogen gas, respectively, is introduced alternately into the stack of fuel cells obtained when a plurality of units are connected in series. Rest gases (hydrogen gas, water steam, air) are conducted out to the periphery of the heat exchanger elements 10, which is illustrated by the arrows L, and there collected. The difference of potential between consecutive heat exchanger elements amount to about 1 V in the absence of current load. The heat exchanger elements are connected in series, wherein the total difference of potential can be adapted to the current application. The heat exchanger elements are here connected through non-conductive couplings (e.g. Teflon), wherein coupling of all of the elements in parallel is avoided. The electric coupling is not showed in the drawings and can be formed in many different ways.

## Claims

1. A plate heat exchanger for performing catalytic reactions, comprising a catalyzer (11) and a plurality of interconnected plate heat exchanger elements (10) having an inlet port (12) for supplying a first medium for interchange of heat with a second medium to be processed catalytically supplied to the heat exchanger element (10), ***characterised* in that**
the heat exchanger elements (10) comprise a shaped first plate (16) connected to a shaped second plate (17) forming a space (18) between the plates accessible to the first medium through the inlet port (12), wherein the first medium can flow inside the heat exchanger element (10),
the catalyzer (11) is arranged accessible to the second medium when it passes through between the interconnected heat exchanger elements (10), and
the heat exchanger elements (10) comprise a plurality of through apertures (14) arranged across the plane of the heat exchanger elements, through which at least the second medium can flow for flowing against the catalyzer (11) and for interchange of heat with the first medium flowing in the heat exchanger elements.

2. A device according to claim 1, wherein the heat exchanger elements (10) comprise opposite recesses (19), in which recesses (19) the apertures (14) are arranged forming a slit (20) around a circumference of the apertures (14).

3. A device according to claim 2, wherein the heat exchanger element comprises an arrow-shaped pattern (15) arranged on surfaces of the plates (16, 17) to obtain a favourable flow of the media and a favourable heat transmission.

4. A device according to claim 2, wherein the heat exchanger elements (10) are coated with a catalytically active layer, comprising the catalyzer, by thermal spraying.

5. A device according to claim 2, wherein catalytic net structures, coated with the catalyzer by thermal spraying, are arranged between the heat exchanger elements (10).

6. A device according to claim 2, wherein the plates (16, 17) are interconnected by means of a solder (21) arranged along circumferences of the plates (16, 17), for connecting and sealing the plates (16, 17).

7. A device according to claim 6, wherein the heat exchanger elements (10) comprise an outlet port (13) arranged in connection with the space (18), through which the first medium can flow from the space (18).

8. A device according to claim 7, wherein the solder (21) is arranged in the slits (20) for sealing thereof and around the inlet ports (12) and the outlet ports (13), separating the space (18) from the apertures (14).

9. A device according to claim 6, wherein the slits (20) are arranged so that the space (18) is connected to the apertures (14), wherein a secondary reaction medium can be supplied to the flow of the second medium to be processed catalytically.

10. A device according to claim 2, wherein a plurality of heat exchanger elements (10) are connected with a relative distance via at least one combined inlet connected to the inlet ports (12).

11. A device according to claim 10, wherein a plurality of heat exchanger elements (10) are arranged in a housing (22) having insulation and sealing.

12. A device according to claim 2, wherein the catalyzer is designed as catalytic electrodes arranged at a polymer membrane (26) in heat exchanger elements (10), forming a fuel cell.

13. A device according to claim 12, wherein the device comprises a first inlet (27) for oxygen/air connected to every other heat exchanger element (10) through inlet ports, and a second inlet (28) for hydrogen gas connected to every other heat exchanger element (10) through inlet ports so that the gases (hydrogen gas and oxygen/air, respectively) flow through the slits (2) into contact with the catalyzer.

14. A method for performing catalytic reactions in a plate heat exchanger comprising a catalyzer (11) and a plurality of interconnected plate heat exchanger elements (10) having an inlet port (12) for supplying a first medium for interchange of heat with a second medium to be processed catalytically supplied to the heat exchanger element (10), comprising the steps of
bringing the first medium into a space (18) inside the heat exchanger element (10) through the inlet port (12), wherein the first medium can flow in a flow direction along the heat exchanger element,
bringing the second medium into contact with the heat exchanger element (10) for interchange of heat with the first medium,
distributing the second medium on the surface of the heat exchanger element (10) by means of a pattern arranged on the surface of the heat exchanger element,
conducting the second medium to recesses (19) arranged in the heat exchanger element (10), through apertures (14) arranged in the recesses and through slits (20) formed by the recesses and the apertures in a flow direction across the flow direction of the first medium,
bringing the second medium into contact with the catalyzer (11) for catalytic reaction or conversion of the second medium, and
repeating the above process.

15. A method according to claim 14, wherein the first medium is prevented from passing through the slits (20) by means of a solder (21).

16. A method according to claim 15, wherein the first medium is conducted through the space (18) in the heat exchanger element (10) to an outlet port (13), wherein the first medium can be brought out from the heat exchanger element (10).

17. A method according to claim 14, wherein a secondary reaction medium is supplied to the space (18) through the inlet port (12) and gradually to the flow of the second medium to be processed catalytically through the slits (20).

18. A method for the manufacture of a catalytic plate heat exchanger comprising a catalyzer (11) and a plurality of interconnected plate heat exchanger elements (10) having an inlet port (12) for supplying a first medium for interchange of heat with a second medium to be processed catalytically, supplied to the heat exchanger element (10), ***characterised* in**
press moulding a first plate (16) and a second plate (17), forming a pattern for distribution of media flowing against surfaces of the plates (16, 17), forming a pattern of projecting portions, forming apertures (14) in the projecting portions and forming the inlet port (12),
joining the plates (16, 17) together by means of a solder, forming a heat exchanger element (10), wherein the projecting portions of the first plate (16) are positioned towards the projecting portions of the second plate (17), forming opposite recesses in the heat exchanger element (10) and forming slits (20) around the circumference of the apertures (14) and a space (18) to which the first medium can flow through the inlet port (12),
arranging the apertures (14) across the plane of the heat exchanger element, wherein the second medium can flow through the heat exchanger element (10) in a direction across the flow direction of the first medium flowing in the heat exchanger element,
arranging a plurality of heat exchanger lements (10) in a suitable relative distance and are joined together through the inlet ports (12), and
arranging the catalyzer (11) accessible for the second medium when it passes through between the interconnected heat exchanger elements (10).

19. A method according to claim 18, wherein the catalyzer (11) is applied by a thermal spraying process.

20. A method according to claim 19, wherein the catalyzer is arranged on a net structure, which net structure is positioned between the heat exchanger elements.

21. A method according to claim 19, wherein the catalyzer (11) is arranged as a catalytic active layer on surfaces of the heat exchanger elements (10).

22. A method according to claim 19, wherein the solder is arranged between the plates (16, 17) after which the plates are moulded in pairs and heated so that the solder is arranged at peripheries of the plates (16, 17) and in the slits (20) around the circumference of the apertures (14) by capillary forces, blocking the slits (20) and joining the plates (16, 17).

23. A method according to claim 19, wherein the plates (16, 17) are soldered in the periphery.

## Patentansprüche

1. Plattenwärmetauscher zum Durchführen katalytischer Reaktionen, umfassend einen Katalysator (11) und mehrere miteinander verbundene Plattenwärmetauscher-Elemente (10) mit einer Einlassöffnung (12) zum Zuführen eines ersten Mediums zum Wärmetausch mit einem zweiten, katalytisch zu verarbeitenden Medium, das dem Wärmetauscherelement (10) zugeführt wird, **dadurch gekennzeichnet, dass**
die Wärmetauscher-Elemente (10) eine geformte erste Platte (16) umfassen, die mit einer geformten zweiten Platte (17) verbunden ist, wodurch ein Raum (18) zwischen den Platten gebildet wird, der über die Einlassöffnung (12) für das erste Medium zugänglich ist, wobei das erste Medium in das Wärmetauscherelement (10) strömen kann,
der Katalysator (11) für das zweite Medium zugänglich angeordnet ist, wenn es zwischen den miteinander verbundenen Wärmetauscher-Elementen (10) hindurchtritt, und
die Wärmetauscher-Elemente (10) mehrere Durchgangsöffnungen (14) umfassen, die über die Ebene der Wärmetauscher-Elemente verteilt angeordnet sind und durch die wenigstens das zweite Medium strömen kann, um gegen den Katalysator (11) zu strömen und zum Wärmetausch mit dem ersten Medium, das in den Wärmetauscher-Elementen strömt.

2. Vorrichtung nach Anspruch 1, bei der die Wärmetauscher-Elemente (10) gegenüberliegende Vertiefungen (19) aufweisen, in denen die Öffnungen (14) angeordnet sind, wobei um den Umfang der Öffnungen (14) ein Schlitz (20) ausgebildet ist.

3. Vorrichtung nach Anspruch 2, bei der das Wärmetauscher-Element ein bogenförmiges Muster (15) umfasst, das auf den Oberflächen der Platten (16, 17) angeordnet ist, um eine günstige Strömung des Mediums und einen günstigen Wärmeübergang zu erzielen.

4. Vorrichtung nach Anspruch 2, bei der die Wärmetauscher-Elemente (10) durch thermisches Besprühen mit einer katalytisch aktiven Lage, umfassend den Katalysator, beschichtet sind.

5. Vorrichtung nach Anspruch 2, bei der katalytische Netzstrukturen, die durch thermisches Aufsprühen mit dem Katalysator aufgebracht sind, zwischen den Wärmetauscher-Elementen (10) angeordnet sind.

6. Vorrichtung nach Anspruch 2, bei der die Platten (16, 17) mittels eines Lötmittels (21) miteinander verbunden sind, das entlang des Umfangs der Platten (16, 17) angeordnet ist, um die Platten (16, 17) zu verbinden und abzudichten.

7. Vorrichtung nach Anspruch 6, bei der die Wärmetauscher-Elemente (10) eine Auslassöffnung (13) umfassen, die in Verbindung mit dem Raum (18) angeordnet ist und durch die das erste Medium aus dem Raum (18) strömen kann.

8. Vorrichtung nach Anspruch 7, bei der das Lötmittel (21) in den Schlitzen (20) zu deren Abdichtung und um die Einlassöffnungen (12) und die Auslassöffnungen (13) angeordnet ist, wodurch der Raum (18) von den Öffnungen (14) getrennt ist.

9. Vorrichtung nach Anspruch 6, bei der die Schlitze (20) derart angeordnet sind, dass der Raum (18) mit den Öffnungen (14) verbunden ist, wobei ein zweites Reaktionsmedium der Strömung des zweiten Mediums, das katalytisch zu verarbeiten ist, zugeführt werden kann.

10. Vorrichtung nach Anspruch 2, bei der mehrere Wärmetauscher-Elemente (10) mit einem Relativabstand über wenigstens einen kombinierten Einlass, der mit den Einlassöffnungen (12) verbunden ist, verbunden sind.

11. Vorrichtung nach Anspruch 10, bei der mehrere Wärmetauscher-Elemente (10) in einem Gehäuse (22) angeordnet sind, das eine Isolation und Abdichtung aufweist.

12. Vorrichtung nach Anspruch 2, bei der der Katalysator in Form von katalytische Elektroden ausgebildet ist, die auf einer Polymermembran (26) in den Wärmetauscher-Elementen (10) angeordnet sind, wodurch eine Brennstoffzelle gebildet wird.

13. Vorrichtung nach Anspruch 12, bei der die Vorrichtung einen ersten Einlass (27) für Sauerstoff/Luft, der über Einlassöffnungen mit jedem anderen Wärmetauscher-Element (10) verbunden ist und einen zweiten Einlass (28) für gasförmigen Wasserstoff, der über Einlassöffnungen mit jedem anderen Wärmetauscher-Element (10) verbunden ist, umfasst, so dass die Gase (gasförmiger Wasserstoff bzw. Sauerstoff/Luft) durch die Schlitze (20) in Kontakt mit dem Katalysator strömen können.

14. Verfahren zum Durchführen von katalytischen Reaktionen in einem Plattenwärmetauscher, umfassend einen Katalysator (11) und mehrere miteinander verbundene Plattenwärmetauscher-Elemente (10), die eine Einlassöffnung (12) zum Zuführen eines ersten Mediums zum Wärmetausch mit einem zweiten katalytisch zu verarbeitenden Medium aufweisen, das dem Wärmetauscher-Element (10) zugeführt wird, umfassend die Schritte:
Einbringen des ersten Mediums in einen Raum (18) innerhalb des Wärmetauscher-Elements (10) durch die Einlassöffnung (12), wobei das erste Medium in einer Strömungsrichtung entlang des Wärmetauscher-Elements strömen kann,
in Kontakt bringen des zweiten Mediums mit dem Wärmetauscher-Element (10) zum Wärmetausch mit dem ersten Medium,
Verteilen des zweiten Mediums auf der Oberfläche des Wärmetauscher-Elements (10) mittels eines Musters, das über die Oberfläche des Wärmetauscher-Elements angeordnet ist,
Führen des zweiten Mediums zu Vertiefungen (19), die in dem Wärmetauscher-Element (10) ausgebildet sind, durch Öffnungen (14), die in den Vertiefungen angeordnet sind und durch Schlitze (20), die durch die Vertiefungen und die Öffnungen gebildet sind in einer Strömungsrichtung quer zur Strömungsrichtung des ersten Mediums,
in Kontakt bringen des zweiten Mediums mit dem Katalysator (11) zur katalytischen Reaktion oder Umwandlung des zweiten Mediums, und
Wiederholen des obigen Vorgangs.

15. Verfahren nach Anspruch 14, bei dem das erste Medium mittels eines Lötmittels (21) daran gehindert wird, durch die Schlitze (20) zu treten.

16. Verfahren nach Anspruch 15, bei dem das erste Medium durch den Raum (18) in dem Wärmetauscher-Element (10) zu einer Auslassöffnung (13) geführt wird, wobei das erste Medium aus dem Wärmetauscher-Element (10) entnommen werden kann.

17. Verfahren nach Anspruch 14, bei dem ein sekundäres Reaktionsmedium durch die Einlassöffnung (12) in den Raum (18) eingeführt wird und allmählich der Strömung des zweiten Mediums, das katalytisch zu verarbeiten ist, durch die Schlitze (20) zugeführt wird.

18. Verfahren zur Herstellung eines katalytisch Plattenwärmetauschers, umfassend einen Katalysator (11) und mehrere miteinander verbundene Plattenwärmetauscher-Elemente (10) mit einer Einlassöffnung (12) zum Zuführen eines ersten Mediums zum Wärmetausch mit einem zweiten Medium, das katalytisch zu verarbeiten ist und dem Wärmetauscher-Element (10) zugeführt wird, **gekennzeichnet durch**
Pressen einer ersten Platte (16) und einer zweiten Platte (17), wobei ein Verteilungsmuster des Mediums, das gegen die Oberfläche der Platten (16, 17) strömt, ein Muster aus vorragenden Abschnitten, Öffnungen (14) in den vorragenden Abschnitten und die Einlassöffnung (12) ausgebildet werden,
Verbinden der Platten (16, 17) **durch** ein Lötmittel, wobei ein Wärmetauscher-Element (10) ausgebildet wird, wobei die vorragenden Abschnitte der ersten Platte (16) zu den vorragenden Abschnitten der zweiten Platte (17) gewandt positioniert sind, gegenüberliegende Vertiefungen in dem Wärmetauscherelement (10) und Schlitze (20) um den Umfang der Öffnungen (14) sowie ein Raum (18) ausgebildet werden, in den das erste Medium **durch** die Einlassöffnung (12) strömen kann,
Anordnen der Öffnungen (14) über die Ebene des Wärmetauscher-Elements, wobei das zweite Medium **durch** das Wärmetauscher-Element (10) in einer Richtung quer zur Strömungsrichtung des ersten Mediums, das in das Wärmetauscher-Element strömt, strömen kann,
Anordnen mehrerer Wärmetauscher-Elemente (10) in geeignetem Relativabstand und miteinander Verbinden über die Einlassöffnungen (12), und
Anordnen des Katalysators (11), so dass er für das zweite Medium zugänglich ist, wenn es zwischen den verbundenen Wärmetauscher-Elementen (10) hindurchtritt.

19. Verfahren nach Anspruch 18, bei dem der Katalysator (11) durch einen thermischen Aufsprühvorgang aufgebracht wird.

20. Verfahren nach Anspruch 19, bei der der Katalysator auf einer Netzstruktur angeordnet ist, welche Netzstruktur zwischen den Wärmetauscher-Elementen positioniert ist.

21. Verfahren nach Anspruch 19, bei dem der Katalysator (11) als eine katalytisch aktive Lage auf Oberflächen der Wärmetauscher-Elemente (10) angeordnet ist.

22. Verfahren nach Anspruch 19, bei dem das Lötmittel zwischen den Platten (16, 17) angeordnet wird, wonach die Platten in Paaren zusammengepresst und erwärmt werden, so dass das Lötmittel am Umfang der Platten (16, 17) und in den Schlitzen (20) um den Umfang der Öffnungen (14) durch Kapillarkräfte angeordnet wird, die Schlitze (20) versperrt und die Platten (16, 17) verbunden werden.

23. Verfahren nach Anspruch 19, bei dem die Platten (16, 17) am Umfang verlötet werden.

## Revendications

1. Echangeur de chaleur à plaque destiné à effectuer des réactions catalytiques, comprenant un catalyseur (11) et une pluralité d'éléments échangeur de chaleur à plaque interconnectés (10) comportant un orifice d'entrée (12) pour fournir un premier milieu pour échange de chaleur avec un second milieu à traiter catalytiquement fourni à l'élément échangeur de chaleur (10) **caractérisé en ce que**
les éléments échangeurs de chaleur (10) comprennent une première plaque façonnée (16) reliée à une seconde plaque façonnée (17) formant un espace (18) entre les plaques accessible au premier milieu par l'orifice d'entrée (12), dans lequel le premier milieu peut s'écouler à l'intérieur de l'élément échangeur de chaleur (10),
le catalyseur (11) est agencé de manière à être accessible au second milieu lorsqu'il passe entre les éléments échangeurs de chaleur interconnectés (10), et
les éléments échangeurs de chaleur (10) comprennent une pluralité d'ouvertures traversantes (14) agencées dans le plan des éléments échangeur de chaleur, à travers lesquels au moins le second milieu peut s'écouler pour écoulement contre le catalyseur (11) et pour échange de chaleur avec le premier milieu s'écoulant dans les éléments échangeurs de chaleur.

2. Dispositif selon la revendication 1, dans lequel les éléments échangeurs de chaleur (10) comprennent des évidements opposés (19), dans lesquels évidements (19) les ouvertures (14) sont agencées en formant une fente (20) autour d'une circonférence des ouvertures (14).

3. Dispositif selon la revendication 2, dans lequel l'élément échangeur de chaleur comprend un motif en forme de flèche (15) agencé sur les surfaces des plaques (16, 17) pour obtenir un écoulement favorable des milieux et une transmission de chaleur favorable.

4. Dispositif selon la revendication 2, dans lequel les éléments échangeur de chaleur (10) sont revêtus d'une couche catalytiquement active, comprenant le catalyseur, par pulvérisation thermique.

5. Dispositif selon la revendication 2, dans lequel des structures de réseau catalytique, revêtues du catalyseur par pulvérisation thermique, sont agencées entre les éléments échangeurs de chaleur (10).

6. Dispositif selon la revendication 2, dans lequel les plaques (16, 17) sont interconnectées au moyen d'une brasure tendre (21) agencée le long des circonférences des plaques (16, 17), destinée à relier et sceller les plaques (16, 17).

7. Dispositif selon la revendication 6, dans lequel les éléments échangeurs de chaleur (10) comprennent un orifice de sortie (13) agencé en liaison avec l'espace (18), à travers lequel le premier milieu peut s'écouler à partir de l'espace (18).

8. Dispositif selon la revendication 7, dans lequel la brasure tendre (21) est agencée dans les fentes (20) destinées au scellage de celles-ci et autour des orifices d'entrée (12) et des orifices de sortie (13), séparant l'espace (18) des ouvertures (14).

9. Dispositif selon la revendication 6, dans lequel les fentes (20) sont agencées de sorte que l'espace (18) est relié aux ouvertures (14), dans lequel un milieu de réaction secondaire peut être fourni à l'écoulement du second milieu à traiter catalytiquement.

10. Dispositif selon la revendication 2, dans lequel une pluralité d'éléments échangeurs de chaleur (10) sont reliés avec une distance relative via au moins une entrée combinée reliée aux orifices d'entrée (12).

11. Dispositif selon la revendication 10, dans lequel une pluralité d'éléments échangeurs de chaleur (10) sont agencés dans un logement (22) ayant une isolation et un scellage.

12. Dispositif selon la revendication 2, dans lequel le catalyseur est conçu sous forme d'électrodes catalytiques agencées au niveau d'une membrane de polymère (26) dans les éléments échangeurs de chaleur (10), formant une pile à combustible.

13. Dispositif selon la revendication 12, dans lequel le dispositif comprend une première entrée (27) pour l'oxygène/air reliée à tout autre élément échangeur de chaleur (10) par l'intermédiaire des orifices d'entrée, et une seconde entrée (28) pour l'hydrogène gazeux reliée à tout autre élément échangeur de chaleur (10) par l'intermédiaire des orifices d'entrée de sorte que les gaz (hydrogène gazeux et oxygène/air, respectivement) s'écoulent à travers les fentes (2) au contact du catalyseur.

14. Procédé destiné à réaliser des réactions catalytiques dans un échangeur de chaleur à plaque comprenant un catalyseur (11) et une pluralité d'éléments échangeurs de chaleur à plaque interconnectés (10) comportant un orifice d'entrée (12) destiné à fournir un premier milieu pour échange de chaleur avec un second milieu à traiter catalytiquement fourni à l'élément échangeur de chaleur (10), comprenant les étapes consistant à
amener le premier milieu dans un espace (18) à l'intérieur de l'élément échangeur de chaleur (10) par l'intermédiaire de l'orifice d'entrée (12), dans lequel le premier milieu peut s'écouler dans une direction d'écoulement le long de l'élément échangeur de chaleur,
amener le second milieu au contact de l'élément échangeur de chaleur (10) pour échange de chaleur avec le premier milieu,
distribuer le second milieu sur la surface de l'élément échangeur de chaleur (10) au moyen d'un motif agencé sur la surface de l'élément échangeur de chaleur,
conduire le second milieu vers les évidements (19) agencés dans l'élément échangeur de chaleur (10), par l'intermédiaire des ouvertures (14) agencées dans les évidements et par l'intermédiaire des fentes (20) formées par les évidements et les ouvertures dans une direction d'écoulement à travers la direction d'écoulement du premier milieu,
amener le second milieu au contact du catalyseur (11) pour une réaction catalytique ou une conversion du second milieu, et
répéter le procédé ci-dessus.

15. Procédé selon la revendication 14, dans lequel le premier milieu est empêché de passer à travers les fentes (20) au moyen d'une brasure tendre (21).

16. Procédé selon la revendication 15, dans lequel le premier milieu est conduit à travers l'espace (18) dans l'élément échangeur de chaleur (10) vers un orifice de sortie (13), dans lequel le premier milieu peut être sorti de l'élément échangeur de chaleur (10).

17. Procédé selon la revendication 14, dans lequel un milieu de réaction secondaire est fourni à l'espace (18) par l'intermédiaire de l'orifice d'entrée (12) et progressivement à l'écoulement du second milieu à traiter catalytiquement par l'intermédiaire des fentes (20).

18. Procédé de fabrication d'un échangeur de chaleur à plaque catalytique comprenant un catalyseur (11) et une pluralité d'éléments échangeur de chaleur à plaque interconnectés (10) comportant un orifice d'entrée (12) destiné à fournir un premier milieu pour échange de chaleur avec un second milieu à traiter catalytiquement, fourni à l'élément échangeur de chaleur (10), **caractérisé par** les étapes consistant à
mouler sous presse une première plaque (16) et une seconde plaque (17), formant un motif pour la distribution de milieux s'écoulant contre les surfaces des plaques (16, 17), former un motif de portions en saillie, former des ouvertures (14) dans les portions en saillie et former l'orifice d'entrée (12),
joindre les plaques (16, 17) ensemble au moyen d'une brasure tendre, formant un élément échangeur de chaleur (10), dans lequel les portions en saillie de la première plaque (16) sont positionnées vers les portions en saillie de la seconde plaque (17), formant des évidements opposés dans l'élément échangeur de chaleur (10) et formant des fentes (20) autour de la circonférence des ouvertures (14) et un espace (18) vers lequel le premier milieu peut s'écouler par l'intermédiaire de l'orifice d'entrée (12),
agencer les ouvertures (14) dans le plan de l'élément échangeur de chaleur, dans lequel le second milieu peut s'écouler à travers l'élément échangeur de chaleur (10) dans une direction à travers la direction d'écoulement du premier milieu s'écoulant dans l'élément échangeur de chaleur,
agencer une pluralité d'éléments échangeur de chaleur (10) à une distance relative appropriée et les joindre ensemble par l'intermédiaire des orifices d'entrée (12), et
agencer le catalyseur (11) pour qu'il soit accessible pour le second milieu lorsqu'il passe entre les éléments échangeurs de chaleur interconnectés (10).

19. Procédé selon la revendication 18, dans lequel le catalyseur (11) est appliqué par un procédé de pulvérisation thermique.

20. Procédé selon la revendication 19, dans lequel le catalyseur est agencé sur une structure de réseau, laquelle structure de réseau est positionnée entre les éléments échangeur de chaleur.

21. Procédé selon la revendication 19, dans lequel le catalyseur (11) est agencé sous la forme d'une couche active catalytique sur les surfaces des éléments échangeur de chaleur (10).

22. Procédé selon la revendication 19, dans lequel la brasure tendre est agencée entre les plaques (16, 17) après quoi les plaques sont moulées en paires et chauffées de sorte que la brasure tendre est agencée aux périphéries des plaques (16, 17) et dans les fentes (20) autour de la circonférence des ouvertures (14) par des forces capillaires, bloquant les fentes (20) et joignant les plaques (16, 17).

23. Procédé selon la revendication 19, dans lequel les plaques (16, 17) sont soudées dans la périphérie.
